Europäisches Patentamt

European Patent Office

Office européen des brevets

(19)

(11) **EP 0 965 573 A1**

(12) **EUROPÄISCHE PATENTANMELDUNG**

(43) Veröffentlichungstag:
22.12.1999  Patentblatt 1999/51

(51) Int. Cl.$^6$: **C04B 18/04**

(21) Anmeldenummer: 99110227.8

(22) Anmeldetag: 26.05.1999

(84) Benannte Vertragsstaaten:
AT BE CH CY DE DK ES FI FR GB GR IE IT LI LU MC NL PT SE
Benannte Erstreckungsstaaten:
AL LT LV MK RO SI

(30) Priorität: 20.06.1998 DE 19827540

(71) Anmelder:
SUC Sächsische Umweltschutz-Consulting GmbH
01307 Dresden (DE)

(72) Erfinder:
• Eife, Karl Heinz, Dr.
07549 Gera (DE)

• Lorenz, Günter, Dr.
08393 Meerane (DE)
• Lukas, Walter, Prof. Dr.
6080 Igels (AT)
• Keller, Heinz, Dipl.-Ing.
06249 Mücheln (DE)
• Dietrich, Frank, Dipl.-Ing.
02977 Hoyerswerda (DE)
• Saal, Wolfgang Dipl.Ing.
06255 Schafstädt (DE)

(74) Vertreter:
Minderop, Ralph H., Dr. rer. nat.
Cohausz & Florack,
Patentanwälte,
Kanzlerstrasse 8a
40472 Düsseldorf (DE)

(54) **Verfahren zur Verwertung von heizwertarmen Fraktionen aus der Haus- und Gewerbeabfallaufbereitung**

(57)     Verfahren zur Herstellung eines Abdeck- oder Profilierungsmaterials zur Abdeckung von Deponien oder Altlasten oder zur Herstellung von Monodeponien, in dem man

    a) eine heizwertarme, aufbereitete und abgetrennte Fraktion aus Haus- und Gewerbeanfall,
    b) hydraulisch reagierende und zur Ettringitbildung befähigte Aschen aus kalorischen Kraftwerken und
    c) Wasser

stark durchmischt, wobei das Mischungsverhältnis der Komponenten a zu b im Gemisch und bezogen auf die Masse bei 1 : 0,2 und 1 : 1,5 und das Massenverhältnis der Summe a + b zu c bei 1 : 0,5 und 1 : 1,25 liegt.

EP 0 965 573 A1

**Beschreibung**

Die Erfindung betrifft ein Verfahren zur Herstellung eines verdichtbaren Materials sowie dessen Verwendung für die Abdeckung von Müllkörpern oder Altlasten bzw. zur Herstellung von Monodeponien, insbesondere der Verwertung von heizwertarmen Abfallfraktionen aus der Haus- oder Gewerbeabfallaufbereitung.

Dem technischen Stand entsprechend werden Haus- und Gewerbeabfälle zur Entsorgung zunächst einer mechanischen Zerkleinerung unterzogen und die zerkleinerten Abfälle durch Siebung in verschiedene Korngrößenfraktionen aufgeteilt.

Dabei hat sich gezeigt, daß die Korngrößenfraktion < 80 mm, die etwa 63% des Haus- und Gewerbeabfalls ausmacht, wegen ihres geringen Heizwertes für eine thermische Verwertung in einer Müllverbrennungsanlage ungeeignet ist.

Problematisch an dieser Abfallfraktion ist ferner, daß sie wegen ihres hohen Gehalts an organischer Substanz (> 5%) nicht ohne kostenintensive Vorbehandlung auf einer Mülldeponie abgelagert werden kann, da andernfalls, durch mikrobiellen Abbau, Gasbildung, Setzungserscheinungen und Deponiesickerwasserbelastung unerwünschte Folgeerscheinungen wären.

Es ist möglich, diese Abfallfraktion zur Mengenminderung bzw. zur Verringerung des Anteils an organischer Substanz einer biologischen Vorbehandlung zuzuführen, was jedoch auf das Zielprodukt der vorliegenden Erfindung keinerlei Einfluß hat.

Die DE 44 17 012 C2 beschreibt ein Verfahren zum Aufbereiten von Klärschlamm, in dem organischer Klärschlamm auf einen Trockensubstanzgehalt zwischen 20 und 35% entwässert und im Intensivmischer mit kalkreicher hydraulischer west-elbischer Braunkohlenfilterasche in einer Menge von mehr als 60%, bezogen auf die Trockensubstanz des Gemischs, unter Ausbildung eines schüttfähigen, krümeligen Materials vermischt wird.

Aus der DE 39 34 085 A1 ist ein Verfahren zur Einbindung und Verfestigung von festen und flüssigen Stoffen mit einem Gehalt an Schwermetallen unter Einsatz eines zumindest latent hydraulischen Bindemittels bekannt. Dem Bindemittel wird Wasser zwischen 25 und 32 Gew.-%, bezogen auf die Hydratphasen bildenden Substanzen, zugegeben. Dieses wird mit dem zu entsorgenden Stoff vermischt, verdichtet und härtet anschließend aus.

Die DE 39 43 163 A1 ist ein Verfahren zur Herstellung eines deponiefähigen Erzeugnisses, in dem hydraulische und nicht hydraulische Stoffgemische, insbesondere Abgänge aus Rauchgasentschwefelungen mit Feinstberge enthaltenen Abgängen vermischt, der Wasseranteil verringert und das enthaltene Gemisch ausgehärtet werden. Die hier eingesetzten feinstkörnigen Feststoffe, vorzugsweise Feinstberge, sind Abgänger aus der Rohstoffaufbereitung und anorganischer Natur.

Aus der DD 296 010 A5 ist ein Verfahren zur komplexen Deponie von Schadstoffen bekannt, in dem die Schadstoffe zur Herstellung von Betonmassen mit Filterasche als Zuschlagstoff oder Bindemitteln versetzt werden.

Der Erfindung lag die Aufgabe zugrunde, heizwertarme Anteile aus der Haus- oder Gewerbeabfallaufbereitung derart weiterzuverarbeiten, daß ein nutzbringend einzusetzender Baustoff erhalten wird. Der Baustoff soll verdichtbar sein und sich im verdichteten Zustand dadurch auszeichnen, daß er bedingt gasdurchlässig ist und eine ausreichende Elastizität, eine geringe Rißanfälligkeit und eine geringe Wasserdurchlässigkeit aufweist. Gleichzeitig soll die mikrobielle Umsetzung der in der heizwertarmen Fraktion enthaltenen organischen Bestandteile dauerhaft und sicher unterbunden werden.

Gelöst wird diese Aufgabe durch ein Verfahren zur Herstellung eines verdichtbaren Materials, worin der heizwertarme Anteil aus der Haus- oder Gewerbeabfallaufbereitung mit einer zur Bildung von Ettringit fähigen Braunkohlenfilterasche und sulfationenhaltigem Wasser in einem Gewichtsverhältnis von 1 : 0,2 : 0,6 bis 1 : 1,5 : 2, vorzugsweise etwa 1 : 0,6 : 1,5, vermischt wird.

Als heizwertarme Anteile aus der Haus- oder Gewerbeabfallaufbereitung im Sinne dieser Erfindung sind diejenigen Anteile zu verstehen, die einen Heizwert von 0 bis 11.000 kcal aufweisen. Dabei handelt es sich in der Regel um Abfallfraktionen mit einem Siebdurchlauf durch eine Maschenweite von 80 mm. Erfindungsgemäß hat es sich als besonders vorteilhaft erwiesen, wenn der heizwertarme Anteil aus der Haus- und Gewerbeabfallaufbereitung eine überwiegende Korngröße von d < 20 mm und eine weitgestreute Korngrößenverteilung aufweist. Derart wird ein sicherer Einschluß von Restabfallpartikeln und eine gute Verdichtbarkeit des Materials erreicht.

Als Braunkohlenfilterasche können Aschen eingesetzt werden, die aufgrund ihres Mineralgehalts zur Bildung von Ettringit befähigt sind. Ettringite sind stäbchenförmige Trisulfatkristalle mit hohem Kristallwasseranteil ($Ca_6Al_2[(OH)_4SO_4]_3 \times 24\ H_2O$). Charakteristisch für Braunkohlenfilteraschen, die zur Bildung von Ettringit befähigt sind, ist beispielsweise ein hoher Freikalkanteil (CaO), Sulfatgehalt ($SO_4^{-2}$) sowie hoher Aluminium- und Siliziumoxidgehalt. Vorzugsweise werden hydraulische Braunkohlenfilteraschen aus dem mitteldeutschen Raum eingesetzt.

Als sulfationenhaltiges Wasser kann jede wäßrige Lösung eingesetzt werden, die Sulfationen enthält. Die Sulfationenkonzentration in der Lösung ist nicht kritisch; sie liegt jedoch vorzugsweise in einem Bereich von > 2000 mg/l. Gemäß einer bevorzugten Ausführungsform der Erfindung wird Deponiesickerwasser als sulfationenhaltiges Wasser eingesetzt.

Das Vermischen der Komponenten erfolgt in einer geeigneten Mischvorrichtung, vorzugsweise im Wirbelbett eines Flugscharmischers.

Infolge des Vermischens der einzelnen Bestandteile stellt sich in dem Gemisch durch die Hydrationswärme, verursacht durch die Caliumhydroxidbildung

$$[CaO + H_2O \rightarrow Ca(OH)_2]$$

eine rasche Temperaturerhöhung auf etwa 70°C ein. Durch diese Temperatur werden im Abfall befindliche Keime weitgehend abgetötet.

Ferner stellt sich in dem Gemisch durch den Freikalküberschuß (CaO) ein stabiler pH-Wert > 11 ein, wodurch jegliche Keimbildung und biologische Umsetzungsprozesse in dem Gemisch langfristig unterbunden werden. Unter diesen Reaktionsbedingungen, insbesondere durch den hohen pH-Wert und die hohen Sulfat- und Aluminiumoxidgehalte bildet sich in dem Gemisch eine Mineralphase aus Ettringit-Kristallen, die organische Komponenten sowie Schadstoffe chemisch und mechanisch einbindet und die bodenmechanischen Eigenschaften des Materials bestimmt. Die Immobilisierung von Schadstoffen erfolgt einerseits durch chemische Bindung in Alumosilikat-Komplexen, andererseits durch Einkapselung in einer festen Kristallstruktur.

Nach einer Reaktionszeit von etwa 30 Minuten entsteht ein schüttfähiges und verdichtbares Material. Die Eluatwerte dieses Materials liegen unter den in der LAGA-Richtlinie (Länderarbeitsgemeinschaft Abfall) für Z2 geforderten Kriterien.

Bei dem erfindungsgemäßen Verfahren werden durch den hohen Wasserüberschuß und die hohen Sulfatgehalte die für Beton üblichen Erhärtungsvorgänge bewußt unterbunden. Diese Reaktionsbedingungen unterstützen vielmehr die Bildung von einem Hauptanteil an Ettringit und eines großen Porenvolumens. Bis zum Abklingen der Reaktion nach etwa 30 Minuten wird das Gemisch auf einer Lagerfläche zwischengelagert. Das nunmehr entstandene Produkt ist ein krümeliges, schüttfähiges und verdichtbares Material.

Das erhaltene verdichtbare Material kann als solches in einer Deponie abgelagert werden. Ein entscheidender Vorteil gegenüber der Ablagerung von unvorbehandelten heizwertarmen Anteilen aus der Haus- oder Gewerbeabfallaufbereitung ist der inerte Zustand des Mischprodukts, in dem sämtliche organischen und anorganischen Bestandteile in einer Kristallstruktur mit langfristig basischem Charakter dauerhaft eingebunden sind und somit biologische Umsetzungsprozesse unterbunden werden (keine Atmungsaktivität). Darüber hinaus wird gegenüber der herkömmlichen Ablagerung eine Einsparung von Deponievolumen erreicht, da das nach dem erfindungsgemäßen Verfahren hergestellte Material eine erheblich größere Verdichtbarkeit als der unvorbehandelte Siebdurchlauf aufweist.

Gleichzeitig kann das nach dem erfindungsgemäßen Verfahren hergestellte Material als temporäre Abdeckung für Müllablagerungen, als Profilierungsmaterial für abzuschließende Deponien, für Sicherungsmaßnahmen in Umweltschutz, Berg- und Deponiebau oder zur Herstellung von monolithischen Körpern (z.B. als Monodeponie oder geologische Barriere) eingesetzt werden.

Hierzu wird das erhaltene Material auf eine Altlast oder einen Müllkörper oder an anderer Stelle aufgebracht und mit geeigneten Vorrichtungen, wie etwa einer Stampffußwalze, verdichtet.

Das verdichtbare Material kann einlagig, vorzugsweise mehrlagig auf die Altlast oder den Müllkörper aufgebracht werden. Die Stärke der einzelnen Schichten liegt beispielsweise bei 10 bis 80 cm, vorzugsweise bei 30 bis 40 cm.

Nach dem Aufbringen und Verdichten des verdichtbaren Materials binden die einzelnen Agglomerate (Krümel) untereinander ab und bilden einen geschlossenen Belag. Sofern mehrere Schichten aufgetragen wurden, binden diese auch untereinander ab.

Gemäß einer bevorzugten Ausführungsform der Erfindung wird die Oberfläche des auf die Altlast oder den Müllkörper aufgebrachten verdichteten Materials mit sulfationenhaltigem Wasser behandelt. Durch eine derartige Behandlung wird das Wachstum der Ettringit-Kristalle unter Umsetzung der puzzolanischen Bestandteile der amorphen Phase in dem verdichteten Material gesteuert. Durch eine nachträgliche Berieselung der Oberfläche des auf die Altlast oder den Müllkörper aufgebrachten Materials wird der für das Wachstum der Ettringit-Kristalle notwendige Sulfatanteil zur Verfügung gestellt. Durch ein nachträgliches Wachsen der Ettringit-Kristalle in die im verdichteten Material vorhandenen Poren wird die Abdeckschicht weiter verdichtet und die Wasserdurchlässigkeit und das Eluationsverhalten auf ein Mindestmaß reduziert.

Eine derart hergestellt Abdeckung von Altlasten oder Müllkörpern weist eine ausreichende Festigkeit ($EV_2$ > 25 MN/qm) für eine Begeh- und Befahrbarkeit bzw. für die Folgenutzung, eine ausreichende Elastizität, um dem Setzungsverhalten des Deponiekörpers folgen zu können, eine geringe Rißanfälligkeit, eine geringe Wasserdurchlässigkeit von $k_f < 10^{-7}$ und eine bedingte Gasdurchlässigkeit auf.

Nachfolgend wird die Erfindung anhand eines Ausführungsbeispiels näher erläutert:

Die Verwertungsanlage für die Verarbeitung der heizwertarmen Fraktionen ist an eine Aufbereitungsanlage für Haus- und Gewerbeabfall gekoppelt, welche wiederum am Standort einer Deponie betrieben wird. Der Siebdurchlauf mit einer Korngröße < 80 mm des vorzerkleinerten Haus- und Gewerbeabfalls wird in Bereitstellungsboxen mit einem Radlader aufgestapelt.

Dieses Rohmaterial hat einen verhältnismäßig geringen Heizwert von < 11.000 kcal und ist in der Korngrößenverteilung sehr inhomogen.

Mittels o.g. Radlader wird der Feinabsieb nach Einschätzung des Radladerfahrers in einen Dosierbehälter gegeben, mit dessen Hilfe eine kontinuierliche Beschickung des Flugscharmischers gewährleistet wird.

Über eine Förderschnecke wird die Zudosierung der Braunkohlenfilterasche realisiert, das Wasser wird über ein Regelventil zugegeben. In einem Mischungsverhältnis von 1 Teil Feinabsieb zu 0,6 Teilen Braunkohlenfilterasche zu 1 Teil Wasser (bezogen auf die Masse) werden die drei Komponenten während der Verweildauer im Flugscharmischer von etwa 1,3 min intensiv vermischt.

Das über ein Förderband ausgetragene Mischgut wird im Haufwerk etwa 30 min. gelagert. In dieser Zeit klingt die Reaktion der Mischkomponenten untereinander ab. Während der Reaktion entsteht im Mischgut eine Temperatur von etwa 75°C. Der dabei freiwerdende Ammoniak wird abgesaugt und in einem Biofilter gebunden.

Mit Bagger oder Radlader wird das Mischprodukt in bereitgestellte Absetzcontainer befördert. Der gefüllte Container wird durch Kipperfahrzeuge aufgenommen und auf eine zugewiesene Fläche auf dem Müllkörper der Deponie abgekippt. Dort wird das Material mit einer Planierraupe auf eine Schichtdicke von 40 bis 50 cm ausplaniert und mittels einer Stampffußwalze verdichtet. Auf diese Schicht wird in der gleichen Art und Weise eine zweite Schicht aufgebracht.

Über dieser sogenannten „arbeitstäglichen Abdeckung" des Müllkörpers kann wiederum Müll abgelagert werden. Die Abdeckschicht verhindert ein Forttragen von Abfall durch Wind, vermindert die Geruchsbelastung durch den Müllkörper, hält die Deponiegase zurück, so daß diese durch eine Gasfassung erfaßt werden können, und verhindert ein Eindringen von Niederschlagswasser aufgrund ihrer hohen Speicherkapazität und der äquivalent hohen Verdunstungsrate durch das große Porenvolumen.

Mittels rasterförmig aufgestellten Feinverteilern wird das in einem Sammelbecken aufgefangene Deponiesickerwasser für eine Dauer von etwa drei Wochen auf dieser Fläche verrieselt.

Zum Aufbau von monolithischen Körpern wird in gleicher Weise vorgegangen, jedoch mit dem Unterschied, daß bis zur Erreichung der geplanten Ausdehnung des Körpers eine Vielzahl von Schichten übereinander aufgetragen wird.

**Patentansprüche**

1. Verfahren zur Herstellung eines Aodeck- oder Profilierungsmaterials zur Aodeckung von Deponien oder Altlasten oder zur Herstellung von Monodeponien, dadurch gekennzeichnet, daß man

    a) eine heizwertarme, aufbereitete und abgetrennte Fraktion aus Haus- und Gewerbeanfall,

    b) hydraulisch reagierende und zur Ettringitbildung befähigte Aschen aus kalorischen Kraftwerken und

    c) Wasser

stark durchmischt, wobei das Mischungsverhältnis der Komponenten a zu b im Gemisch und bezogen auf die Masse bei 1 : 0,2 und 1 : 1,5 und das Massenverhältnis der Summe a + b zu c bei 1 : 0,5 und 1 : 1,25 liegt.

2. Verfahren nach Anspruch 1, dadurch gekennzeichnet, daß die heizwertarme Fraktion (Komponente a) eine Korngröße von 0 bis 80 mm aufweist.

3. Verfahren nach Anspruch 1 oder 2, dadurch gekennzeichnet, daß die heizwertarme Fraktion (Komponente a) vor der Verarbeitung einer biologischen Vorbehandlung unterzogen wird.

4. Verfahren nach Anspruch 1 oder 2, dadurch gekennzeichnet, daß an CaO reiche Aschen verwendet werden.

5. Verfahren nach einem der Ansprüche 1 bis 3, dadurch gekennzeichnet, daß das Gemisch vor dem Einbau durch eine Zwischenlagerung eine Vorreife erreicht.

6. Verfahren nach Anspruch 1, dadurch gekennzeichnet, daß das Wasser ein sulfationenhaltiges Wasser ist.

7. Verfahren nach Anspruch 1 bis 4, dadurch gekennzeichnet, daß auf die verdichtete Abdeck- oder Profilierungsschicht langzeitlich sulfationenhaltiges Wasser, insbesondere Deponiesickerwasser, zur erhöhten Speichermineralbildung aufgebracht, vorzugsweise verrieselt wird.

8. Verfahren nach Anspruch 1 bis 6, dadurch gekennzeichnet, daß das nach einem der Ansprüche 1 bis 6 erhaltene Gemisch auf einer Deponie oder Altlast aufgebracht und verdichtet wird.

9. Verfahren nach Anspruch 1 bis 6, dadurch gekennzeichnet, daß das nach einem der Ansprüche 1 bis 6 erhaltene Gemisch zur Herstellung einer Monodeponie eingesetzt wird.

Europäisches
Patentamt

**EUROPÄISCHER RECHERCHENBERICHT**

Nummer der Anmeldung

EP 99 11 0227

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | DE 196 38 960 A (VEAG) 26. März 1998 (1998-03-26) * Spalte 2, Zeile 13-19; Anspruch * --- | 1,2,4,6,9 | C04B18/04 |
| X | FR 2 672 046 A (A. JACQUART, ET AL.) 31. Juli 1992 (1992-07-31) * Seite 1, Zeile 27-30; Ansprüche 1,4,7,10 * --- | 1,2,9 | |
| X | DE 40 40 804 A (P. DOEHLER) 17. Juni 1992 (1992-06-17) * Zusammenfassung * --- | 1,2,4 | |
| X,D | GB 2 224 024 A (SALZBURGER STADWERKE AG) 25. April 1990 (1990-04-25) * Zusammenfassung * --- | 1,2,4,9 | |
| X | DE 195 31 942 A (VEAG) 20. Februar 1997 (1997-02-20) * Anspruch 1 * --- | 1,2,4,6,8 | |
| X | DE 35 06 550 A (H. BECKER) 28. August 1986 (1986-08-28) * Anspruch 1 * --- | 1,2,9 | RECHERCHIERTE SACHGEBIETE (Int.Cl.6) C04B B09B |
| A,D | DE 44 17 012 A (SUC) 16. November 1995 (1995-11-16) * Ansprüche 1-4,10 * --- | 1,4,5,8 | |
| A | WO 88 02739 A (HOELTER GMBH) 21. April 1988 (1988-04-21) * Ansprüche 1,16 * --- | 1,7 | |
| A | WO 89 04815 A (NEWMONT MINING CORP.) 1. Juni 1989 (1989-06-01) ----- | | |

Der vorliegende Recherchenbericht wurde für alle Patentansprüche erstellt

| Recherchenort | Abschlußdatum der Recherche | Prüfer |
|---|---|---|
| DEN HAAG | 28. September 1999 | Daeleman, P |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 99 11 0227

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-09-1999

| Im Recherchenbericht angeführtes Patentdokument | Datum der Veröffentlichung | Mitglied(er) der Patentfamilie | Datum der Veröffentlichung |
|---|---|---|---|
| DE 19638960 A | 26-03-1998 | KEINE | |
| FR 2672046 A | 31-07-1992 | KEINE | |
| DE 4040804 A | 17-06-1992 | KEINE | |
| GB 2224024 A | 25-04-1990 | AT 396558 B<br>AT 237489 A<br>CH 678018 A<br>DE 3934085 A<br>FR 2638109 A | 25-10-1993<br>15-02-1993<br>31-07-1991<br>19-04-1990<br>27-04-1990 |
| DE 19531942 A | 20-02-1997 | KEINE | |
| DE 3506550 A | 28-08-1986 | KEINE | |
| DE 4417012 A | 16-11-1995 | KEINE | |
| WO 8802739 A | 21-04-1988 | DE 3634650 A<br>AT 60317 T<br>EP 0323482 A<br>JP 2500959 T | 19-05-1988<br>15-02-1991<br>12-07-1989<br>05-04-1990 |
| WO 8904815 A | 01-06-1989 | AT 75710 T<br>EP 0393043 A<br>FI 96509 B | 15-05-1992<br>24-10-1990<br>29-03-1996 |

EPO FORM P0461

Für nähere Einzelheiten zu diesem Anhang : siehe Amtsblatt des Europäischen Patentamts, Nr.12/82